# FASCICULE DE BREVET EUROPEEN

(11) **EP 0 483 028 B1**
(45) Date de publication et mention de la délivrance du brevet: **21.02.1996**
(21) Numéro de dépôt: 91420375.7
(22) Date de dépôt: 22.10.1991
(51) Int. Cl.: B28B 7/34, B28B 7/00, B28B 3/02, B22F 5/00, C04B 22/00, C04B 28/14

(54) **Moules pour la formation par pressage d'objets céramiques ou analogues**
Formen zur Herstellung von keramischen Gegenständen oder dergleichen durch Pressen
Moulds for forming by pressing ceramic articles or the like

(30) Priorité: 23.10.1990 FR 9013341
(43) Date de publication de la demande: 29.04.1992
(73) Titulaire: LAFARGE PRESTIA, F-84800 L'Isle sur Sorgue (FR)
(72) Inventeur: Canard, Germain, F-03510 Molinet (FR)
(74) Mandataire: Gaucherand, Michel

(56) Documents cités:
- DE-A- 3 644 144
- DE-B- 2 403 835
- FR-A- 2 227 937
- GB-A- 962 826
- US-A- 2 248 032
- US-A- 2 400 905
- US-A- 3 993 727
- CHEMICAL ABSTRACTS, vol. 109, no. 8, Août 1988, Columbus, Ohio, US; abstract no. 60359, V.F. CHERNYKH: 'PROPERTIES OF PLASTER OF PARIS CONTAINING A SUPERPLASTICIZER' page 361
- SYNDICAT NATIONAL DES INDUSTRIES DU PLATRE, LE PLATRE PHISICO-CHIMIE FABRICATION ET EMPLOIS 1982,EDITIONS EYROLLES,PARIS,P.238-240
- CHEMICAL ABSTRACTS, vol. 94, no. 24, 15 Juin 1981, Columbus, Ohio, US; abstract no. 196566, M. V. PULIN: 'PROPERTIES OF MIXTURES OF GYPSUM SEMIHYDRATE WITH ALUMINA CEMENT' page 284

## Description

### DOMAINE DE L'INVENTION

L'invention concerne des moules par la formation par pressage d'objets céramiques ou analogues, moules comportant deux parties, l'une mâle et l'autre femelle.

L'invention concerne également le procédé de fabrication desdits moules.

L'invention concerne aussi les compositions mises en oeuvre pour la réalisation des moules.

Enfin l'invention concerne les objets céramiques façonnés par pressage par application desdits moules à leur façonnage.

### ARRIERE-PLAN DE L'INVENTION

Les moules destinés à la formation d'objets céramiques, selon le procédé de pressage, sont réalisés, par exemple, au moyen d'un mélange de résines et de sables, ou encore et plus généralement par gâchage de plâtres spéciaux, dits "plâtres de moulage". Les matériaux minéraux constitutifs des moules sont choisis pour leur capacité à créer, lors de leur mise en oeuvre, des structures capillaires ou microporeuses permettant la circulation de fluides liquides et/ou gazeux, tels que l'eau provenant de la pâte céramique utilisée pour le formage par pressage de l'objet souhaité, et l'air injecté dans le moule pour décoller la pièce moulée après pressage.

Dans la réalisation par pressage d'objets céramiques à partir de pâtes appropriées, le moule mis en oeuvre est formé de deux parties, l'une mâle et l'autre femelle, constituant les empreintes dudit moule. L'une des parties, qu'elle soit mâle ou femelle, est généralement statique, alors que l'autre est mobile, l'une et l'autre provoquant, par l'action d'un effort approprié, la création de l'objet souhaité par déformation d'un volume de pâte céramique plastique entre les deux empreintes.

Lors du pressage, la partie femelle du moule est soumise à de mutiples contraintes mécaniques répétées, qui sont à l'origine de détériorations rapides et importantes, entraînant la réforme, souvent précoce, du moule.

L'une de ces contraintes est provoquée par l'application d'une forme pression à la pâte céramique plastique à mouler, par la partie mâle du moule et par sa transmission à la partie femelle. La répétition fréquente de cette contrainte, dans un procédé de fabrication en grande série, est à l'origine d'une rupture souvent précoce de la partie femelle du moule rupture se localisant dans la zone à la limite des parois latérales et du fond. Cette rupture, qui se manifeste par la présence de fentes ou d'éclatements locaux, produit des défauts apparents sur les objets moulés les rendant impropres à une commercialisation : le moule est dès lors réformé.

Une autre de ces contraintes également induites par l'application d'une forte pression, est l'action érosive intempestive des parois des empreintes mâles et femelles provoquée par la déformation dynamique de la pâte céramique plastique entre les deux empreintes du moule. Cette action érosive, qui provoque des changements de forme et d'épaisseur des parois de l'objet moulé, peut non seulement en changer les aspects esthétiques, mais aussi engendrer, lors de traitements thermiques post-moulage, des incidents majeurs, tels que des fissures rendant l'objet impropre à une commercialisation : le moule est dès lors inutilisable.

Or, selon les procédés connus, même parmi les plus récents, que la littérature spécialisée cite pour la réalisation des moules destinés à la production d'objets céramiques, la partie femelle du moule est obtenue par le remplissage d'un châssis métallique au moyen, par exemple, d'une suspension aqueuse de plâtre de moulage, éventuellement associé à certains adjuvants, le châssis étant préalablement muni d'une matrice propre à créer l'empreinte souhaitée, grâce à des moyens de renforcement tels que des armatures et des moyens permettant la circulation ultérieure de fluides liquide et/ou gazeux dans la structure du moule.

Dans les brevets français 449.954 et 2.601.896, dans le brevet allemand 435.196 et le brevet belge 706.214, qui concernent la préparation de moules destinés à être exploités selon le procédé de coulage, il apparaît que les parties mâle ou femelle des moules sont réalisés en une seule opération de remplissage du châssis, cette partie étant dès lors monobloc. Et il apparaît que les améliorations recherchées le sont dans les domaines des compositions mises en oeuvre pour la fabrication des moules, dans ceux des procédés utilisés pour la mise en oeuvre de ces compositions, ainsi que dans ceux des divers autres moyens destinés à favoriser l'obtention de moules plus résistants et de longévité améliorée.

La demande de brevet allemand N° 3644144 concerne un moule pour profiler ou structurer par pressage des matériaux plastiques, du ciment fibré (fibrociment) et en particulier pour mouler des plaques ondulées de ciment fibré. Ce moule, constitué de plusieurs couches en matière plastique, présente une couche élastique servant à presser le matériau à mouler, suivie d'une couche dure, plus solide, résistant à la pression, destinée à donner au moule sa forme, comportant des fissures et qui est recouverte par une autre couche élastique.

La demande de brevet allemand N° 2403835 concerne un moule pour la production d'objets céramiques à partir de masses céramiques plastiques ou fluides selon la technique du moulage par injection ou sous pression.

Dans la région située en face du conduit d'entrée dans la zone de remplissage du moule est disposé un insert constitué d'acier fritté poreux très résistant à l'abrasion et dont le rôle est d'empêcher l'érosion du moule provoquée par l'introduction de la masse à mouler.

Bien que les moules destinés à la formation par moulage d'objets céramiques ou analogues soient réalisés en utilisant les améliorations décrites dans la littérature spécialisée, tant dans le domaine des compositions que dans celui des procédés de fabrication desdits moules, on observe que ces moules n'échappent pas aux désagréments majeurs habituellement constatés par l'homme de métier, dès lors qu'ils sont mis en oeuvre dans une chaîne industrielle de production, c'est-à-dire rupture de la partie femelle du moule et érosion sensible des parois des empreintes par un effort mécanique, inconvénients entraînant la précocité de la réforme du moule.

Dès lors, un premier objet de l'invention vise à réaliser des moules pour pressage dont la partie femelle ne soit plus le siège de ruptures anarchiques et à éviter ainsi l'apparition de détériorations précoces des empreintes du moules.

Un autre objet de l'invention vise à réaliser des moules pour pressage ayant une capacité améliorée à résister à l'érosion des parois des empreintes lors de la déformation dynamique des pâtes céramiques plastiques au cours du pressage.

Un dernier objet de l'invention vise à créer des moules d'une durée de vie franchement améliorée, réalisant en production industrielle au moins deux fois plus d'opérations de pressage qu'avec des moules de l'art connu.

Par la suite et pour bien saisir l'objet et l'enjeu de l'invention, l'expression "face de l'une au moins des parties d'un moule" définira la totalité ou une fraction de l'une quelconque des parois ou le fond de l'une au moins des parties mâle ou femelle dudit moule.

### SOMMAIRE DE L'INVENTION

Consciente des inconvénients précités, la demanderesse a poursuivi à travers ses recherches, la mise au point d'un moule pour la formation par pressage d'objets céramiques répondant aux objectifs qu'elle s'est assignés.

Selon l'invention, les moules pour la formation d'objets céramiques par pressage se composent de deux parties, l'une mâle et l'autre femelle, l'une au moins des faces de l'une au moins des parties étant désolidarisée des autres faces, et se caractérisent en ce qu'ils sont réalisés en des matériaux ayant une micro-porosité suffisante pour permettre la circulation des fluides liquides et/ou gazeux dans la masse dudit moule.

### DESCRIPTION DETAILLEE DE L'INVENTION

Pour mieux saisir l'invention, il est souhaitable de la décrire par comparaison avec l'art antérieur et pour ce faire, d'illustrer le type de moule le plus généralement préconisé, d'évoquer son mode de fabrication et de révéler les zones de fractures qui se manifestent rapidement après sa mise en oeuvre industrielle.

La Figure 1 représente en coupe verticale, le mode de réalisation de la partie femelle d'un moule de l'art antérieur pour la formation d'objets céramiques par pressage.

La Figure 2 représente en coupe verticale, le moule de la Figure 1 après sa réalisation et sa mise en oeuvre industrielle selon le procédé de pressage, dans laquelle la partie femelle est statique et la partie mâle, mobile.

La Figure 3 représente en coupe horizontale selon J,J' le moule de la Figure 1 après sa réalisation et sa mise en oeuvre industrielle selon le procédé de pressage.

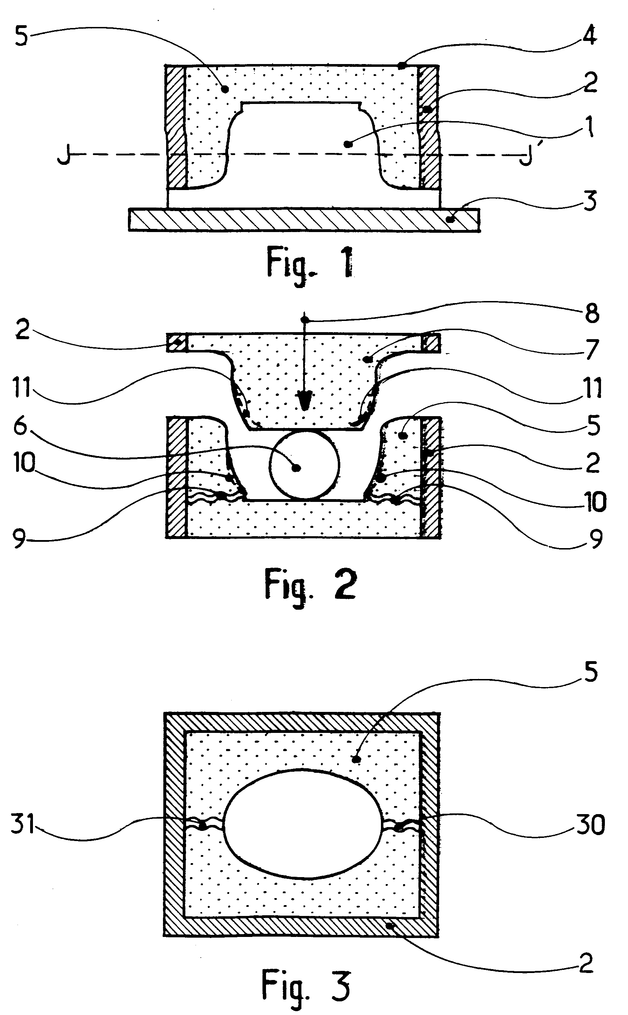

Lorsque le moule doit être fabriqué (Figure 1), une matrice (1) traitée par un agent de démoulage et un châssis métallique de renforcement (2) sont d'abord mis en position sur un support horizontal (3), dont la surface a été également traitée par un agent de démoulage. Puis ayant placé, conformément aux techniques du métier, des moyens de renforcement et des moyens permettant la circulation ultérieure de fluides liquide (de l'eau) et/ou gazeux, la zone libre entre la matrice (1) et le châssis (2) est remplie en une seule opération jusqu'à la face supérieure (4) du châssis (2) au moyen d'une suspension aqueuse d'un plâtre de moulage (5). Lorsque la suspension aqueuse de remplissage a pris masse et qu'une circulation d'air a été pratiquée pour créer la porosité interne souhaitée, le châssis (2) et son remplissage (5) sont retirés du support (3) et constituent la partie femelle d'un moule de pressage.

Lorsque le moule de pressage, comportant la partie femelle du châssis (2), son remplissage poreux (5) et la partie mâle (7), est mis en oeuvre industriellement selon le procédé de pressage (Figure 2), un volume de pâte céramique plastique (6) est placé dans le fond, puis soumis à une déformation dynamique par pressage au moyen de la partie mâle du moule se déplaçant selon le sens de la flèche (8) jusqu'à la formation de l'objet souhaité. Dès lors, la partie mâle (7) remonte en entraînant l'objet formé, l'injection d'air comprimé dans les parties (5) et (7) du moule à des moments appropriés permettant un démoulage facile de l'objet obtenu.

Mais la répétition du cycle de pressage provoque rapidement, comme l'illustrent les Figures 2 et 3, une première rupture -selon le repère (9)- suivie d'autres ruptures - selon les repères (30) et (31)- de la partie femelle du moule ainsi qu'une érosion des empreintes selon les repères (10) et (11). Ruptures et érosion provoquent des défauts répétés sur les objets moulés et des difficultés de démoulage dues à une fuite de l'air insufflé par les fentes de rupture.

Par opposition, le moule selon l'invention se distingue de l'art connu par le fait que l'une au moins des faces de l'une au moins des parties mâle et/ou femelle constituant ledit moule est désolidarisée des autres faces.

De ce fait, la partie dont l'une des faces au moins est désolidarisée des autres faces n'est plus monobloc mais multiblocs et dès lors, oppose aux contraintes mécaniques, à l'origine des ruptures précoces et érosions profondes, une élasticité suffisante d'une zone de contrainte à une autre zone pour lui permettre d'encaisser ces contraintes sans apparition des dommages précoces antérieurement constatés.

Les moules de pressage, objet de l'invention, peuvent être réalisés en des matériaux aussi divers que les plâtres de moulage, associés ou non à des adjuvants connus, se présentant sous la forme de suspensions aqueuses, ou encore des résines synthétiques contenant éventuellement des charges minérales, tous ces matériaux ayant une microporosité suffisante pour permettre la circulation des fluides liquide et/ou gazeux dans la masse dudit moule.

Toutefois et souhaitablement, les moules selon l'invention sont réalisés au moyen d'une composition minérale de remplissage à base de l'un au moins des plâtres de type connu habituellement utilisé pour la réalisation des moules de pressage, cette composition comportant, exprimée en pour cent en poids de matières sèches :

| | |
|---|---|
| Plâtre | 80 à 100 |
| de préférence | 90 à 100 |
| et très préférentiellement | 92 à 95 |
| Agent réactif de formule (mCaO, nAl203, pZ) | 20 à 0 |
| de préférence | 10 à 0 |
| et très préférentiellement | 8 à 5 |

Le plâtre pour moulage peut être choisi parmi les produits commercialisés à cet effet, tels que ceux vendus par les sociétés PRESTIA LAFARGE, LAMBERT, BOERGARDTS, GIULINI, respectivement sous les marques PRESTIAFORM, MOLDA PRESSAGE, KERADUR et ASDUR.

L'agent réactif de formule (MCa0, nAl203, pZ) dans laquelle :
. Z représente SO₃ et/ou NO₃ et,
. m peut prendre les valeurs de l'intervalle 1 à 12, limites comprises,
. n peut prendre les valeurs de l'intervalle 1 à 7, limites comprises, et
. p peut prendre les valeurs 0 à 3, limites comprises
peut être introduit dans les compositions selon l'invention, sous la forme, par exemple d'aluminates de calcium, de sulfoaluminates de calcium, de nitroaluminates de calcium, de mélanges d'aluminate de sodium et de chaux, mis en oeuvre seuls ou en combinaison. Mais cet agent réactif peut être également mis en oeuvre sous des formes plus commerciales, telles que par exemple sous la forme d'un ciment alumineux tel que ceux vendus par la société LAFARGE FONDU INTERNATIONAL sous les marques FONDU ou SECAR 51, par la société UNIVERSAL ATLAS sous la marque LUMNITE, ou par la société ALCOA sous la marque CA14.

Dans la réalisation du moule, la mise en oeuvre de la composition minérale précitée s'effectue à partir d'une dispersion d'une quantité pondérale appropriée de ladite composition représentée par (P) exprimée en parties en poids dans un volume unitaire d'eau représenté par (E) également exprimé en parties en poids conduisant à la définition d'un rapport P/E.

Ainsi, dans le cas où il apparaît souhaitable de créer une porosité identique dans les parties mâle et femelle du moule, le rapport P/E est choisi dans l'intervalle 2,5/1 à 3,2/1.

Mais, dans le cas où il apparaît salutaire de créer des porosités différentes dans les parties mâle ou femelle des moules, le rapport P/E est choisi :
. dans l'intervalle compris entre 2,7/1 et 3,2/1 pour la partie femelle,
. dans l'intervalle compris entre 2,5/1 et 3,0/1 pour la partie mâle,
étant entendu que le choix fait dans les intervalles précités l'est en relation, d'une part avec le type de pâte céramique plastique mise en oeuvre lors du pressage et d'autre part, avec la forme de la pièce à réaliser.

Divers autres adjuvants de type connu peuvent également être introduits dans les compositions précitées, ces divers adjuvants étant, par exemple, des fibres de verte, de carbone, des fibres synthétiques, telles que fibres de polyoléfines, polyamides, polyesters, polyacryliques.

Pour la réalisation des parties des moules selon l'invention, divers types de procédés peuvent être pratiqués. Dans un premier procédé qui est réalisé par étapes, après avoir mis en place sur un support approprié traité par un agent de démoulage, un châssis métallique de renforcement et la matrice propre à la formation de l'empreinte selon une première étape, on positionne un écran à la limite des faces de la partie du moule qui doivent être désolidarisées, puis à l'intérieur de la zone libre délimitée par le châssis, la matrice et l'écran, on insère les moyens permettant la circulation ultérieure de fluides liquide et/ou gazeux et les moyens de renforcement habituellement utilisés par l'homme de métier.

Puis, on introduit dans ladite zone libre la composition de remplissage , qui, au cours et après la prise en masse, subit les traitements habituellement pratiqués par l'homme de métier, pour créer la porosité souhaitée, c'est-à-dire, l'introduction d'air comprimé et éventuellement un traitement thermique. Selon les étapes suivantes, on retire l'écran placé à la limite des faces à désolidariser, éventuellement on le place dans une nouvelle position, on traite par un agent de démoulage la surface ainsi libérée de la composition de remplissage prise en masse, on insère dans cette zone zone libre (délimitée par la matrice, les surfaces débarrassées de leur écran, et éventuellement l'écran dans sa nouvelle position) des moyens permettant la circulation ultérieure de fluides liquide et/ou gazeux qui peuvent être raccordés par un moyen étanche à ceux de la première zone ou laissés indépendants et on coule ensuite dans cette zone libre la composition de remplissage, qui au cours et après sa prise en masse, subit comme dans la première étape, les traitements habituellement pratiqués par l'homme de métier, tels que introduction d'air comprimé, traitement thermique et autres.

Dès lors, en opérant selon des étapes successives de réalisation, les parties du moule selon l'invention comportent autant de faces désolidarisées qu'il est souhaitable d'en avoir.

Dans un autre procédé, chaque zone de la partie du moule dont les faces doivent être désolidarisées, est réalisée individuellement au moyen de deux moules distincts, puis après la prise, ces derniers sont montés, ajustés éventuellement en présence d'un joint souple.

Ainsi, les moules pour pressage selon l'invention comportant des parties mâle et femelle, grâce au fait que l'une au moins des faces de l'une au moins des parties est désolidarisée des autres faces, offrent une longévité exceptionnelle dès lors qu'ils sont exploités à l'échelle industrielle, ayant une durée de vie d'au moins le double de celles des moules de pressage antérieurs qui sont le siège de ruptures quasi immédiates.

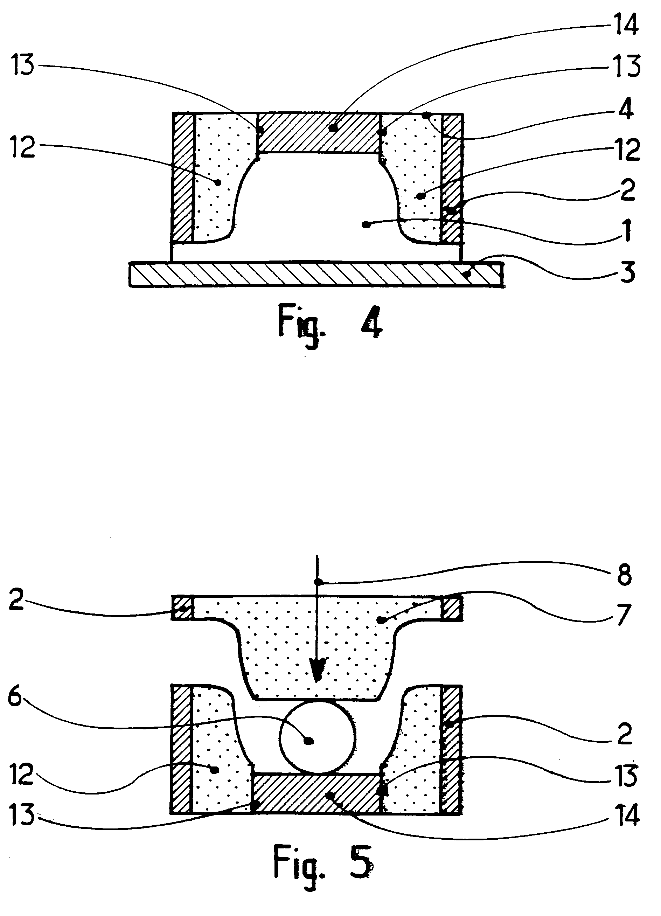

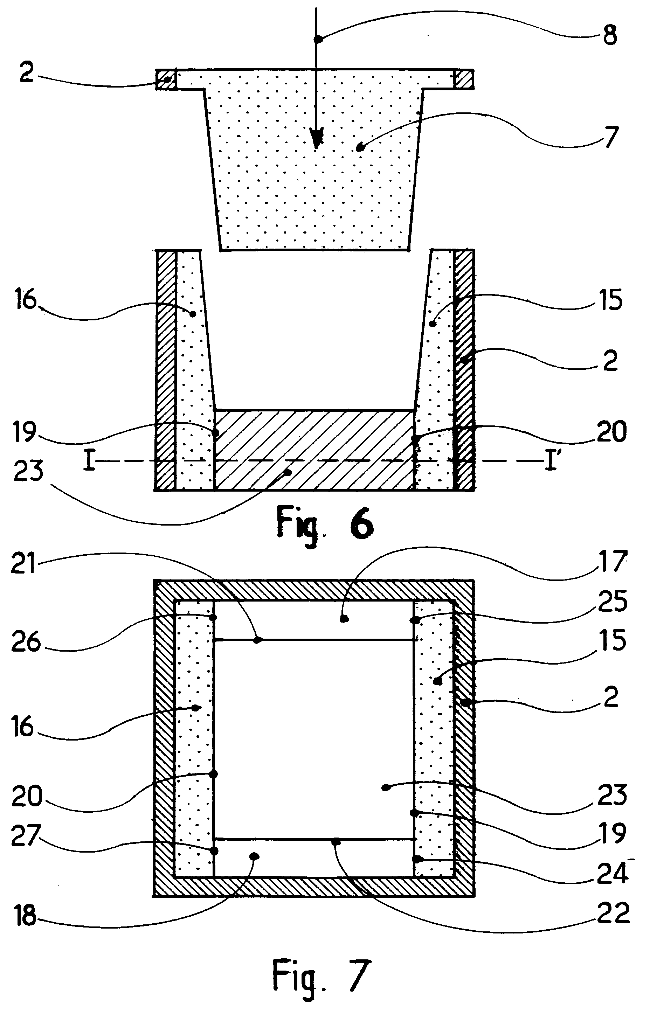

Les Figures 4 à 7 illustrent une réalisation de la partie femelle du moule selon l'invention (Figure 4) selon le procédé par étape comportant au moins deux faces désolidarisées (Figures 4, 6, 7) et l'exploitation du moule en production industrielle (Figures 5 et 6).

Le figure 4 représente, en coupe verticale, un mode de réalisation de la partie femelle d'un moule selon l'invention.

Le Figure 5 représente, en coupe verticale, les parties femelle (de la Figure 4) et mâle constituant le moule selon l'invention lors de leur mise en oeuvre industrielle selon le procédé de pressage.

Le Figure 6 représente une coupe verticale d'un moule de pressage selon l'invention dont la partie femelle comporte huit faces désolidarisées.

Le Figure 7 représente une coupe horizontale de la Figure 6 pratiquée selon I,I' permettant d'observer les huit faces désolidarisées de la partie femelle du moule selon l'invention.

Selon la Figure 4 représentant en coupe verticale un mode de réalisation du moule selon l'invention, une matrice (4) et un châssis métallique de renforcement (2) sont placés sur un support horizontal (3), matrice et plaque étant préalablement traitées par un agent de démoulage.

Puis, selon une première étape, un écran (13) est placé verticalement à la limite des faces qu'il est souhaitable de désolidariser. Dès lors et selon les techniques connues du métier, des moyens de renforcement (non représentés) et des moyens permettant la circulation ultérieure de fluides liquide (de l'eau) et/ou gazeux (de l'air) (non représentés), sont placés dans la zone libre (12) délimitée par le châssis (2), une partie de la matrice (1) et l'écran (13). Cette zone est alors remplie jusqu'à la face supérieure (4) du châssis (2) au moyen d'une suspension aqueuse d'un plâtre conforme aux compositions précitées. Au cours de la prise en masse de ladite suspension, une insufflation d'air a été réalisée en vue de créer la porosité interne souhaitée, en utilisant les moyens de circulation (des fluides) implantés dans cette zone (12).

Au terme de cette première étape, l'écran (13) est retiré et la surface du matériau de remplissage ainsi découverte est traitée au moyen d'un agent de démoulage.

Puis selon une deuxième étape, la zone libre (14), délimitée par la partie de la matrice non encore utilisée et la surface du matériau de remplissage de la zone (12) libérée de l'écran (13), est dotée des moyens de renforcement (non représentés) et des moyens permettant la circulation ultérieure des fluides liquide (eau) et/ou gazeux (air) (non représentés),ces derniers pouvant être raccordés de manière étanche à ceux de la zone (12) ou maintenus indépendants. Le zone libre (14) est alors remplie jusqu'à la face supérieure du châssis (2) au moyen d'une suspension aqueuse de plâtre de composition identique à celle mise en oeuvre dans la zone (12).

Au cours de la prise en masse, une insufflation d'air utilisant les moyens de circulation des fluides est pratiquée pour créer la porosité interne recherchée.

La Figure 5, qui est une coupe verticale des parties femelle (selon la Figure 4) et mâle constituant le moule selon l'invention, illustre la mise en oeuvre industrielle dudit mouie selon un procédé de pressage. Pour ce faire, un volume de pâte céramique plastique (6) est placé dans le fond de la partie femelle, puis est soumis à une déformation dynamique par pressage au moyen de la partie mâle (7) du moule se déplaçant dans le sens de la flèche (8) jusqu'à formation de l'objet souhaité.

Puis la partie mâle (7) du moule remonte en entraînant l'objet formé, alors que dans le même temps, de l'air comprimé est injecté dans les parties mâle et femelle du moule, à des moments appropriés pour permettre le démoulage facile dudit objet.

La répétition du cycle de pressage ne provoque aucune rupture de la partie femelle du moule, aucun défaut sur la objets moulés.

Les Figures 6 et 7 illustrent le cas d'un moule selon l'invention dont l'une des parties (la partie femelle) dispose de huit faces désolidarisées.

La Figure 6 est une coupe verticale des parties mâle (7) et femelle constituant le moule selon l'invention mis en oeuvre dans un procédé de pressage, la partie femelle est réalisée selon le procédé par étapes successives, conformément à la description qui en est donnée dans le cas de la Figure 4. Ainsi, les zones de remplissage (15, 16, et 23), visibles dans cette figure, créent la faces désolidarisées (19 et 20).

La Figure 7 qui est une coupe de la Figure 6 selon I,I' permet de voir dans la partie femelle du moule selon l'invention, toutes les faces des zones de remplissage (15, 16, 17, 18 et 23) désolidarisées la unes des autres (19, 20, 21, 22, 24, 25, 26 et 27), réalisés par étapes successives conformément au procédé décrit dans le cas de la Figure 4.

Ainsi les moules selon l'invention pour la formation d'objets céramiques par pressage sont particulièrement remarquables en raison des qualités exceptionnelles qu'ils développent en comparaison avec les moules de l'art antérieur.

Parmi ces qualités exceptionnelles, peut être plus spécialement mentionnée une excellente résistance à la rupture grâce à la constitution multiblocs desdits moules permettant d'encaisser des contraintes cycliques sans dommage et octroyant une durée de vie assez exceptionnelle (trois fois à cinq fois celle des moules de l'art antérieur).

Parmi ces qualités, peut être également indiquée une substantielle amélioration de la résistance à l'érosion permettant la conservation d'empreintes franches et démunies de défauts précoces.

Enfin, parmi les qualités, peut être aussi précisée une très bonne résistance aux chocs thermiques répétés.

L'invention sera mieux comprise grâce à la description illustrative des exemples de mise en oeuvre de moules réalisés selon l'invention en comparaison avec un moule réalisé selon l'art antérieur.

### EXEMPLE 1

Cet exemple illustre la réalisation et la mise en oeuvre industrielle d'un moule de pressage selon l'art antérieur pour la fabrication d'un récipient (plat ovale creux) ayant la dimensions 270 mm x 180 mm x 75 mm.

Ce moule, conformément aux Figures 1 et 2, comporte deux parties, l'une femelle (statique) et l'autre mâle (mobile).

Chaque partie est réalisée selon le procédé connu sur le nom de Ram Process.

Pour réaliser la partie femelle, une matrice (1) (en bosse) et le châssis métallique de renfort (2) la contenant sont placés sur le support horizontal (3), les surfaces de la matrice et de la plaque étant traitées par un agent de démoulage.

Puis sont placés conformément aux techniques connues de l'homme de métier, une gaine poreuse autour de la matrice ainsi que des moyens de renfort. Ensuite la zone libre entre la matrice (1) et le châssis métallique (2) est remplie en une seule opération au moyen d'une suspension minérale aqueuse ayant la composition suivante :

| | |
|---|---|
| **Plâtre** commercialisé par PRESTIA LAFARGE sous la marque PRESTIAFORM | 30 parties en poids |
| **Eau** | 10 parties en poids |

Au cours de la prise en masse de la composition précitée, une circulation d'air forcé est pratiquée à travers la gaine poreuse jusqu'à l'obtention d'une porosité interne telle que souhaitée. Au terme de cette préparation, le châssis et son remplissage constituant la partie femelle du moule sont libérés de la matrice (2) et du support horizontal (3). La partie femelle ainsi réalisée est monobloc.

La partie mâle du moule est réalisée selon le même principe, la zone libre laissée par la matrice en creux étant remplie d'une suspension minérale aqueuse ayant la composition suivante :

| | |
|---|---|
| **Plâtre** commercialisé par PRESTIA LAFARGE sous la marque PRESTIAFORM | 20 parties en poids |
| **Eau** | 10 parties en poids |

Au cours de la prise en masse de la composition, la partie mâle subit une injection d'air jusqu'à l'obtention de la porosité recherchée. Ladite partie mâle ainsi réalisée est monobloc.

Les deux parties mâle et femelle du moule ainsi préparées ont été montées sur une presse hydraulique du type VICENTINI, ayant une puissance de 20 tonnes au piston.

La pâte céramique utilisée pour le pressage de l'objet est du type faïence (à base d'argile) ayant une teneur en au de 20 pour cent.

Au cours de son exploitation par pressage, la partie femelle du moule a subi une première rupture (selon le repère 9 de la Figure 2) dès la dixième pièce produite provoquant d'autres ruptures selon les repères (30) et (31) de la Figure 3. Toutefois, le moule a pu produire des pièces pressées, mais comportant des marques en relief correspondant aux fentes de rupture. De plus, les parties femelles et mâles ont révélé, dès la centième pièce environ, une érosion qui s'est accentuée dans le temps.

La conjugaison de ces différents défauts a provoqué la réforme du moule après 1 500 pièces produites environ.

### EXEMPLE 2

Cet exemple illustre la réalisation et la mise en oeuvre industrielle d'un moule de pressage selon l'invention pour la fabrication du même récipient que celui de l'Exemple 1.

Ce moule, conforme aux Figures 4 et 5, comporte deux parties, l'une femelle (statique) et l'autre mâle (mobile).

Pour réaliser la partie femelle, la matrice (1) et le châssis métallique de renforcement (2) sont placés sur le support horizontal (3), les surfaces de la matrice et de la plaque étant préalablement traitées au moyen d'un agent de démoulage.

Puis selon une première étape, un écran (13) est placé verticalement selon la position indiquée dans la Figure 4, à la limite des faces qu'il est souhaitable de désolidariser.

Dès lors, et conformément aux techniques du métier, les moyens de renforcement et des moyens pour la circulation des fluides (gaine poreuse) liquides et/ou gazeux sont placés dans la zone libre (12). Cette zone est ensuite remplie jusqu'à la face supérieure (4) du châssis (2) au moyen d'une suspension minérale aqueuse ayant la composition suivante :

| | |
|---|---|
| **Plâtre** commercialisé par PRESTIA LAFARGE sous la marque PRESTIAFORM | 30 parties en poids |
| **Eau** | 10 parties en poids |

Au cours de la prise en masse de la composition, une circulation d'air forcé est pratiquée à travers la gaine poreuse jusqu'à l'obtention d'une porosité interne telle que souhaitée.

Au terme de cette première étape, l'écran (13) est retiré et la surface du matériau de remplissage ainsi découverte est traitée au moyen d'un agent de démoulage.

Puis selon une deuxième étape, la zone libre (14) délimitée par la partie de la matrice non-encore utilisée et la surface du matériau de remplissage de la zone (12) libérée de l'écran (13), est munie des moyens de renforcement et des moyens de circulation de fluides liquide et/ou gazeux (gaine poreuse), ces derniers étant raccordés d'une manière étanche à la gaine poreuse mise en place dans la zone 12. La zone libre (14) est alors remplie jusqu'à la face supérieure (4) du châssis (2) au moyen de la même suspension aqueuse que celle mise en oeuvre dans la zone (12).

Au cours de la prise en masse, une insufflation d'air est pratiquée au moyen de la gaine poreuse pour créer la porosité interne recherchée. Dès lors, la partie femelle ainsi réalisée est multiblocs.

La partie mâle du moule a été réalisée selon le principe monobloc tel que décrit dans l'Exemple 1, la zone libre laissée par la matrice en creux étant remplie d'une suspension minérale aqueuse ayant la composition suivante :

| | |
|---|---|
| **Plâtre** commercialisé par PRESTIA LAFARGE sous la marque PRESTIAFORM | 28 parties en poids |
| **Eau** | 10 parties en poids |

Au cours de la prise en masse de la composition, cette partie mâle subit une insufflation d'air jusqu'à l'obtention de la porosité recherchée.

Les deux parties mâle et femelle du moule ont été montées sur la presse hydrolique VICENTINI d'une puissance de 20 tonnes au piston.

La pâte céramique utilisée pour le pressage de l'objet est du type faïence (à base d'argile), ayant une teneur en au de 20 pour cent en poids.

Au cours de son exploitation par pressage, la partie femelle du moule n'a subi aucune rupture. Le moule a pu produire sans défaut des pièces pressées jusqu'à environ la millième pièce.

A partir de ce nombre, les parties mâle et femelle ont commencé à manifester une amorce d'érosion qui s'est amplifiée dans le temps. Le moule a été réformé à environ 3 000 pièces produites, à cause de l'érosion constatée, équivalente à celle observée dans l'Exemple 1 au moment de la réforme, bien que les pièces produites ne présentent pas de défaut majeur.

### EXEMPLE 3

Cet exemple illustre la réalisation et la mise en oeuvre industrielle d'un moule de pressage selon l'invention pour la fabrication du même récipient que celui des Exemples 1 et 2.

Le moule est conforme aux Figures 4 et 5.

Les parties mâle et femelle sont réalisées selon les principes décrits dans l'Exemple 2, la partie femelle étant multiblocs, la partie mâle, monobloc.

Toutefois, le moule se distingue de celui de l'Exemple 2 par la composition des suspensions minérales aqueuses mises en oeuvre pour sa réalisation.

Ainsi, pour la partie femelle réalisée en plusieurs étapes, la suspension minérale aqueuse de remplissage a la composition suivante :

| | |
|---|---|
| **Plâtre** commercialisé par PRESTIA LAFARGE sous la marque PRESTIAFORM | 27,9 parties en poids |
| **Aluminate de calcium** commercialisé par LAFARGE FONDU INTERNATIONAL sous la marque "FONDU" | 2,1 parties en poids |
| **Eau** | 10 parties en poids |

Pour la partie mâle, réalisée en une seule étape, la suspension minérale aqueuse de remplissage a la composition suivante :

| | |
|---|---|
| **Plâtre** commercialisé par PRESTIA LAFARGE sous la marque PRESTIAFORM | 26,6 parties en poids |
| **Aluminate de calcium** commercialisé par LAFARGE FONDU INTERNATIONAL sous la marque "FONDU" | 1,4 partie en poids |
| **Eau** | 10 parties en poids |

Les deux parties mâle et femelle sont montées sur la presse hydraulique VICENTINI d'une puissance de 20 tonnes au piston.

La pâte céramique mise en oeuvre pour le pressage de l'objet est la même que celle des Exemples 1 et 2.

Au cours de son exploitation par pressage, la partie femelle du moule n'a subi aucune rupture. Le moule a pu produire sans défaut 4 000 pièces environ. A partir de ce nombre, les parties mâle et femelle ont commencé à manifester un début d'érosion, phénomène qui s'est amplifié en fonction du nombre de pièces produites.

Toutefois, le moule n'a été réformé qu'à 7 500 pièces produites environ, en raison de la seule érosion constatée, équivalente à celle observée dans l'Exemple 1 au moment de la réforme du moule, les pièces produites ne présentant cependant pas de défaut majeur.

### EXEMPLE 4

Cet exemple illustre la réalisation et la mise en oeuvre industrielle d'un moule de pressage selon l'invention pour la fabrication d'un récipient cubique de dimensions 120 mm x 120 mm x 120 mm.

Ce moule est conforme aux Figures 6 et 7.

Les parties mâle et femelle sont réalisées selon la principes décrits dans l'Exemple 2, la partie mâle étant monobloc et la partie femelle multiblocs.

La partie femelle a été réalisée en cinq étapes successives pour créer les zones (15, 16, 17, 18 et 23), dont les faces (19, 20, 21, 22, 24, 25, 26 et 27) sont, de cette manière, toutes désolidarisées.

Les moyens permettant la circulation des fluides liquides et/ou gazeux (gaine poreuse) dans chacune des zones précitées sont reliés à ceux des autres zones par un moyen étanche.

Les compositions des suspensions minérales aqueuses mises en oeuvre pour la réalisation des parties mâle et femelle sont celles décrites dans l'Exemple 3.

Au terme de leur réalisation, les parties mâle et femelle sont montées sur la presse hydraulique VICENTINI d'une puissance de 20 tonnes au piston.

La pâte céramique mise en oeuvre est identique à celle des autres exemples.

Au cours de son exploitation par pressage, la partie femelle du moule n'a subi aucune rupture. Le moule a pu produire sans défaut apparent 2 000 pièces environ. Au-delà, les parties mâle et femelle ont commencé à manifester un début d'érosion.

Le moule a été réformé à 3 500 pièces produites pour raison d'érosion. Le choix de cette forme particulière, pourtant très difficile à réaliser par pressage, a été fait pour montrer les possibilités extrêmes attachées à cette invention.

## Revendications

1. Moule pour la formation d'objets céramiques par pressage comportant deux parties, l'une mâle (7) et l'autre femelle, l'une au moins des faces de l'une au moins des parties étant désolidarisée des autres faces, le moule étant réalisé en des matériaux ayant une micro-porosité suffisante pour permettre la circulation des fluides liquides et/ou gazeux dans la masse dudit moule.

2. Moule selon la revendication 1 caractérisé en ce qu'il est réalisé au moyen d'une composition minérale de remplissage comportant :
. au moins un plâtre habituellement utilisé pour la réalisation des moules de pressage,
. éventuellement un agent réactif de formule :
m CaO, nAl₂0₃, pZ
dans laquelle Z représente SO₃ et/ou N0₃, m prend une valeur de l'intervalle 1 à 12 (bornes incluses), n une valeur de l'intervalle 1 à 7 (bornes comprises) et p prend une valeur de l'intervalle 0 à 3 (bornes comprises).

3. Moule de pressage selon l'une des revendications 1 ou 2 caractérisé en ce que la composition minérale de remplissage comporte :
. de 80 à 100 pour cent en poids de plâtre,
. de 20 à 0 pour cent en poids de l'agent réactif.

4. Moule de pressage selon la revendication 3 caractérisé en ce que la composition minérale de remplissage comporte :
. préférentiellement de 90 à 100 et très préférentiellement de 92 à 95 pour cent en poids de plâtre ;
. préférentiellement de 10 à 0 et très préférentiellement de 8 à 5 pour cent en poids de l'agent réactif.

5. Moule de pressage selon l'une quelconque des revendications 1 à 4 caractérisé en ce que l'agent réactif de formule m CaO, nAl₂0₃, pZ de la composition de remplissage est choisi dans le groupe constitué par les aluminates de calcium, les sulfoaluminates de calcium, les nitroaluminates de calcium, les mélanges d'aluminate de sodium et de chaux et les ciments alumineux mis en oeuvre seuls ou en combinaison.

6. Moule de pressage selon l'une quelconque des revendications 1 à 5 caractérisé en ce que la composition minérale de remplissage (représentée par P) est associée à une phase aqueuse (représentée par E) selon un rapport pondéral P/E choisi dans l'intervalle 2,5/1 et 3,2/1.

7. Moule de pressage selon la revendication 6 caractérisé en ce que le rapport pondéral P/E est choisi :
. pour la partie femelle des moules dans l'intervalle 2,7/1 et 3,2/1 ;
. pour la partie mâle (7) des moules dans l'intervalle 2,5/1 à 3,0/1.

8. Moule de pressage selon la revendication 1 caractérisé en ce que la composition de remplissage est une résine synthétique, contenant éventuellement des charges minérales.

9. Moule de pressage selon l'une quelconque des revendications 1 à 8, caractérisés en ce que la composition de remplissage contient des adjuvants choisis dans le groupe constitué par les fibres de verre, fibres de carbone et fibres synthétiques.

10. Procédé de réalisation des moules de pressage selon l'une quelconque des revendications 1 à 9, comportant pour l'une et/ou l'autre des parties femelle ou mâle (7) l'usage d'un châssis (2) de renforcement d'une matrice propre à la formation de l'empreinte, des moyens de renforcement et de circulation ultérieurs des fluides liquides et/ou gazeux caractérisés en ce que :
a) on positionne un écran (13) à la limite des faces à désolidariser,
b) on insère les moyens de renforcement et/ou de circulation des fluides liquides et/ou gazeux,
c) on introduit dans la zone délimitée par le châssis (2) la matrice et l'écran (13), la composition de remplissage et on crée la porosité de ladite composition par les moyens connus,
d) on retire l'écran (13) de l'étape (a) et on traite la surface libérée par un agent de démoulage,
e) éventuellement, on renouvelle les étapes (a) à (d) pour créer autant de forces solidarisées qu'il est souhaité,
f) on insère dans la dernière zone restée libre (14) les moyens de renforcement et de circulation des fluides liquides et/ou gazeux et on y introduit la composition du remplissage.

11. Utilisation des moules de pressage selon les revendications 1 à 9 pour réaliser des objets céramiques.

## Claims

1. Mould for the formation of ceramic objects by pressing comprising two parts, one male (7) and the other female, at least one of the faces of at least one of the parts being detached from the other faces, the mould being produced from materials having sufficient micro-porosity to allow the circulation of liquid and/or gaseous fluids in the mass of said mould.

2. Mould according to Claim 1, characterized in that it is produced by means of a mineral filling composition comprising:
. at least one plaster normally used for producing pressing moulds,
. optionally a reagent corresponding to the formula:
m CaO, nA1₂0₃, pZ
in which Z represents SO₃ and/or NO₃, m assumes a value in the range of 1 to 12 (inclusive), n a value in the range of 1 to 7 (inclusive) and p assumes a value in the range of 0 to 3 (inclusive).

3. Pressing mould according to one of Claims 1 or 2, characterized in that the mineral filling composition comprises:
. from 80 to 100 per cent by weight of plaster,
. from 20 to 0 per cent by weight of the reagent.

4. Pressing mould according to Claim 3, characterized in that the mineral filling composition comprises:
. preferably from 90 to 100 and very preferably from 92 to 95 per cent by weight of plaster:
. preferably from 10 to 0 and very preferably from 8 to 5 per cent by weight of the reagent.

5. Pressing mould according to any one of Claims 1 to 4, characterized in that the reagent of formula m CaO, nA1₂0₃, pZ of the filling composition is selected from the group consisting of calcium aluminates, calcium sulfoaluminates, calcium nitroaluminates, mixtures of sodium aluminate and lime and aluminous cements used alone or in combination.

6. Pressing mould according to any one of Claims 1 to 5, characterized in that the mineral filling composition (represented by P) is combined with an aqueous phase (represented by E) in a ratio by weight P/E selected in the range of 2.5/1 and 3.2/1.

7. Pressing mould according to Claim 6, characterized in that the ratio by weight P/E is selected:
. in the range of 2.7/1 and 3.2/1 for the female part of the moulds;
. in the range of 2.5/1 to 3.0/1 for the male part (7) of the moulds.

8. Pressing mould according to Claim 1, characterized in that the filling composition is a synthetic resin optionally containing mineral charges.

9. Pressing mould according to any one of Claims 1 to 8, characterized in that the filling composition contains additives selected from the group consisting of glass fibres, carbon fibres and synthetic fibres.

10. Process for producing pressing moulds according to any one of Claims 1 to 9 involving, for either the female part or male part (7), the use of a reinforcing framework (2) for a die suitable for forming the impression, means for the subsequent reinforcement and circulation of the liquid and/or gaseous fluids, characterized in that:
(a) a screen (13) is positioned at the limit of the faces to be detached,
(b) means for the reinforcement and/or circulation of the liquid and/or gaseous fluids are inserted,
(c) the die and the screen (13) and the filling composition are introduced into the zone defined by the framework (2) and the porosity of said composition is created by known means,
(d) the screen (13) from stage (a) is removed and the freed surface is treated with a mould-release agent,
(e) stages (a) to (d) are optionally repeated to create as many combined forces as desired,
(f) means for the reinforcement and circulation of liquid and/or gaseous fluids are inserted into the last free zone (14) and the filling composition is introduced therein.

11. Use of the pressing moulds according to Claims 1 to 9 to produce ceramic objects.

## Patentansprüche

1. Form zur Herstellung von keramischen Gegenständen durch Pressen, zwei Teile umfassend, nämlich ein Einsteckteil (7) und ein Aufnahmeteil, wobei wenigstens eine der Flächen von wenigstens einem der Teile getrennt ist von den anderen Flächen und die Form aus Materialien ist, die eine ausreichend große Mikroporosität aufweisen, um die Zirkulation von flüssigen oder gasförmigen Fluiden in der Masse von besagter Form zu ermöglichen.

2. Form nach Anspruch 1, dadurch gekennzeichnet, daß sie hergestellt wird mittels einer mineralischen Füllmasse, umfassend:
- wenigstens einen üblicherweise zur Herstellung von Preßformen verwendeten Gips,
- eventuell einen reaktiven Wirkstoff der Formel:
m CaO, nAl₂O₃, pZ
in der Z SO₃ und/oder NO₃ repräsentiert, m einen Wert des Intervalls 1 bis 12 annimmt (inklusive Grenzen), n einen Wert des Intervalls 1 bis 7 (inklusive Grenzen) annimmt und p einen wert des Intervalls 0 bis 3 (inklusive Grenzen).

3. Preßform nach einem der Ansprüche 1 oder 2, dadurch gekennzeichnet, daß die mineralische Füllmasse umfaßt:
- von 80 bis 100 Gewichtsprozent Gips,
- von 20 bis 0 Gewichtsprozent reaktiven Wirkstoff.

4. Preßform nach Anspruch 3, dadurch gekennzeichnet, daß die mineralische Füllmasse umfaßt:
- vorzugsweise von 90 bis 100 und insbesondere von 92 bis 95 Gewichtsprozent Gips;
- vorzugsweise von 10 bis 0 und insbesondere von 8 bis 5 Gewichtsprozent reaktiven Wirkstoff;

5. Preßform nach einem der Ansprüche 1 bis 4, dadurch gekennzeichnet, daß der reaktive Wirkstoff der Formel CaO, nAl₂O₃, pZ der Füllmasse gewählt wird aus der Gruppe, gebildet durch die Calciumaluminate, die Calciumsulfoaluminate, die Calciumnitroaluminate, die Mischungen aus Natriumaluminat und Kalk und die Aluminatzemente, allein oder kombiniert verwendet.

6. Preßform nach einem der Ansprüche 1 bis 5, dadurch gekennzeichnet, daß die mineralische Füllmasse (repräsentiert durch P) mit einer wäßrigen Phase (repräsentiert durch E) vereinigt wird entsprechend einem Gewichtsverhältnis P/E, gewählt aus dem Intervall 2,5/1 und 3,2/1.

7. Preßform nach Anspruch 6, dadurch gekennzeichnet, daß das Gewichtsverhältnis P/E gewählt wird:
- für das Aufnahmeteil der Formen aus dem Intervall 2,7/1 und 3,2/1
- für das Einsteckteil (7) der Formen aus dem Intervall 2,5/1 bis 3,0/1.

8. Preßform nach Anspruch 1, dadurch gekennzeichnet, daß die Füllmasse ein synthetisches Harz ist, das eventuell mineralische Füllstoffe enthält.

9. Preßform nach einem der Ansprüche 1 bis 8, dadurch gekennzeichnet, daß die Füllmasse Zusatzstoffe enthält, gewählt aus der durch die Glasfasern, Kohlenstoff-Fasern und Kunstfasern gebildeten Gruppe.

10. Herstellungsverfahren von Preßformen nach einem der Ansprüche 1 bis 9, umfassend für das eine und/oder das andere der Teile, nämlich Aufnahmeteil oder Einsteckteil (7), die Verwendung eines Verstärkungsrahmens (2) einer für die Ausbildung der Abformung geeigneten Matrize, Einrichtungen zur Verstärkung und späteren Zirkulation von flüssigen und/oder gasförmigen Fluiden,
**dadurch gekennzeichnet:**
a) daß man eine Abschirmung (13) an der Grenze der zu trennenden Flächen anbringt,
b) daß man Einrichtungen zur Verstärkung und/oder Zirkulation der flüssigen und/oder gasförmigen Fluids einfügt,
c) daß man in die durch den Rahmen (2), die Matrize und die Abschirmung (13) abgegrenzten Zone die Füllmasse einleitet, und daß man durch die bekannten Mittel die Porosität der besagten Masse erzeugt,
d) daß man die Abschirmung (13) des Schritts (a) entfernt und die freigesetzte Fläche mit einem Formtrennmittel behandelt,
e) daß man die Schritte (a) bis (d) eventuell wiederholt, um ebensoviele solidarisierte bzw. verbundene Kräfte zu erzeugen wie gewünscht.
f) daß man in die letzte freigebliebene Zone (14) die Einrichtungen zur Verstärkung und Zirkulation der flüssigen und/oder gasförmigen Fluide einfügt und dort die Füllmasse einleitet.

11. Verwendung von Preßformen nach den Ansprüchen 1 bis 9 zum Herstellen von keramischen Gegenständen.
